# EUROPÄISCHE PATENTSCHRIFT

(11) **EP 1 268 249 B1**
(45) Veröffentlichungstag und Bekanntmachung des Hinweises auf die Patenterteilung: **04.05.2005**
(21) Anmeldenummer: 01927729.2
(22) Anmeldetag: 15.03.2001
(51) Int. Cl.: B60T 8/44, B60T 13/52

(54) **FAHRZEUGBREMSSYSTEM MIT EINEM PNEUMATISCHEN BREMSKRAFTVERSTÄRKER**
VEHICLE BRAKING SYSTEM WITH A PNEUMATIC BRAKE BOOSTER
SYSTEME DE FREINAGE AUTOMOBILE AVEC SERVOFREIN PNEUMATIQUE

(30) Priorität: 20.03.2000 DE 10013532; 09.06.2000 DE 10028691
(43) Veröffentlichungstag der Anmeldung: 02.01.2003
(73) Patentinhaber: Continental Teves AG & Co. oHG, 60488 Frankfurt (DE)
(72) Erfinder: BURGDORF, Jochen, 63075 Offenbach (DE); DROTT, Peter, 65936 Frankfurt/Main (DE); VOLZ, Peter, 64291 Darmstadt (DE)
(86) Internationale Anmeldenummer: PCT/EP2001/002926
(87) Internationale Veröffentlichungsnummer: WO 2001/070551

(56) Entgegenhaltungen:
- EP-A- 0 379 329
- EP-A- 0 754 607
- WO-A-98/35867
- WO-A-99/30944
- WO-A-99/38741

## Beschreibung

Die Erfindung betrifft ein Fahrzeugbremssystem mit einem pneumatischen Bremskraftverstärker mit den Merkmalen des Oberbegriffs des Patentanspruch 1.

Ein derartiges Bremssystem ist beispielsweise aus der EP 754 607 A2 bekannt und umfasst wirksame Mittel zum Erkennen des Aussteuerungspunktes des pneumatischen Bremskraftverstärkers sowie eine zusätzliche Verstärkungsvorrichtung, welche mittels der Erkennungsmittel aktivierbar ist, wenn der Aussteuerungspunkt des pneumatischen Bremskraftverstärkers erreicht ist. Das Mittel zum Erkennen des Aussteuerungspunktes umfasst einen pneumatischen Druckschalter und einen elektrischen (Berührungs-) Schalter im Bereich einer Reaktionsscheibe, der zwei gegenüberliegende Kontakte an der Reaktionsscheibe selbst sowie eine leitende Bahn an einem Ventilkolben aufweist. Eine elektrische Auswerteeinheit erkennt den Aussteuerungspunkt für den Fall, daß beide Schalter betätigt, mit anderen Worten elektrisch geschlossen sind.

Die bekannte Vorrichtung ist aufwendig, weil zwei Schalter und die Auswertung derer Signale vorgesehen ist. Dies verursacht nicht nur einen erhöhten Aufwand in Hinblick auf die Kalibrierung der beiden Schalter, sondern auch Mehraufwand an Hardware.

Schließlich ist jedes Kabel flüssigkeitsdicht aus dem Inneren des Bremskraftverstärkers heraus- und einer elektrischen Steuereinheit zuzuführen. Schließlich erfordert die Implementierung dieses Systems eine Auswertungssoftware, welche zwei Schalter berücksichtigt. Alleine ein Schalter im Bereich der Reaktionsscheibe löst die Aufgabe nicht, weil jede Betätigung des Bremskraftverstärkers zu einer Berührung zwischen Ventilkolben und Reaktionsscheibe führt, ohne daß der Aussteuerpunkt zwangsläufig erreicht sein muß.

Ein einziger pneumatischer Schalter oder Sensor zur Sensierung des pneumatischen Druckes in der Kammer variablen Drucks (Arbeitskammer) ist nachteilig, weil beispielsweise bei einer Verstopfung des Belüftungskanals nur sehr langsam oder gar keine Verstärkungskraft aufgebaut wird. Weil folglich der pneumatische Schalter nicht betätigt wird, erfolgt auch keine Erkennung des Fehlers, obwohl der Fahrzeugführer eine erhöhte Verstärkungskraft nachfragt. Daher ist auch kein Signal für die Aktivierung einer zusätzlichen Hilfskraftquelle erzeugbar.

Es ist eine Aufgabe der vorliegenden Erfindung, ein vereinfachtes und gleichzeitig verbessertes Fahrzeugbremssystem mit Aussteuerungspunkterkennung bereitzustellen, welches auch in Fällen, in denen der pneumatische Bremskraftverstärker nicht die nachgefragte Verstärkungskraft liefert, ein entsprechendes Signal liefert.

Diese Aufgabe wird zusammen mit den Merkmalen des kennzeichnenden Teils des Patentanspruch 1 dadurch gelöst, daß ein einziges Schalt- oder Sensormittel vorgesehen ist, welches eine, oberhalb einer Schaltschwelle liegende, maximale Annäherung zwischen einem die Eingangskraft repräsentierenden Bauteil des Bremskraftverstärkers, insbesondere einem Eingangsglied, und einem die Verstärkungskraft repräsentierenden Bauteil des Bremskraftverstärkers, insbesondere einer beweglichen Wand oder einem damit verbundenen Bauteil, sensiert, und wobei Mittel zur Erfassung der Haltezeit vorgesehen sind, so daß die Zeitspanne, innerhalb derer die maximale Annäherung zwischen den beiden relativ zueinander bewegbaren Bauteilen vorliegt bestimmbar ist, und erst nach Ablauf einer vorbestimmten Zeitspanne ein, den Aussteuerungspunkt meldendes Signal abgegeben wird.

In weiterer vorteilhafter Ausgestaltung der Erfindung erfolgt die Sensierung der Annäherung zwischen dem Eingangsglied bzw. einem Ventilkolben und dem, die bewegliche Wand tragenden Steuergehäuse.

Schließlich ist es vorteilhaft, in dem Bereich zwischen Ventilkolben und dem Steuergehäuse einen Spalt vorzusehen, welcher sich mit zunehmender Verstärkungskraft des Bremskraftverstärkers verkleinert. Es bietet sich an, einen vollständig aufgebrauchten oder zumindest stark verkleinerten Spalt (das heißt gewissermaßen eine Anlage zwischen Ventilkolben und Steuergehäuse im Bereich des Schalters / Sensors) für die Sensierung des Aussteuerungspunktes heranzuziehen. Dementsprechend muß dann der Schalter / Sensor mit seinem Betätigungselement in das Steuergehäuse oder in den Ventilkolben integriert sein.

Es versteht sich schließlich, daß die elektrischen Signale des Schalters/Sensors über eine flüssigkeitsdichte Kabelverbindung einer elektrischen Steuereinheit zugeführt werden. Es kann sich bei dieser Steuereinheit vorzugsweise um eine elektrische Steuereinheit eines ABS-Regelsystems beispielsweise mit Fahrdynamikregelungsfunktionen oder um eine elektrische Steuereinheit eines fremdbetätigbaren, vorzugsweise elektromagnetisch betätigbaren Bremskraftverstärkers handeln. Derartige Steuereinheiten sind ohnehin in nahezu allen modernen Fahrzeugen vorhanden, so daß der Hardware-Aufwand für die Steuereinheit weiter verringert wird.

Es ist weiterhin vorteilhaft, einen Mikroschalter mit besonders kleinen Maßen einzusetzen, um Bauraum zu sparen.

Es ist ein wesentlicher Vorteil der Erfindung, daß der Aussteuerungspunkt erfindungsgemäß direkt ermittelt wird, das heißt unmittelbar im Bereich der zu vergleichenden Differenzkräfte, ohne zwei Schalter oder Sensoren vorsehen zu müssen und insbesondere ohne die Notwendigkeit einen pneumatischen Drucksensors.

Weitere vorteilhafte Ausführungsformen der Erfindung gehen aus Unteransprüchen im Zusammenhang mit der Beschreibung und der Zeichnung hervor.

In der Zeichnung zeigt:
Fig. 1 im Teilschnitt eine prinzipielle Verdeutlichung der Erfindung anhand eines pneumatischen Bremskraftverstärkers in einer oberen Zeichnungshälfte in Grundstellung und in einer unteren Zeichnungshälfte im Aussteuerpunkt;
Fig. 2 eine zweite Variante in zeichnerischer Darstellung wie in Fig. 1;
Fig. 3 eine andere prinzipielle Lösung in zeichnerischer Darstellung wie in Figur 1;
Fig. 4 eine weiterhin andere Lösung in zeichnerischer Darstellung wie in Figur 1, und
Fig. 5: einen teilweise schematisierten Schnitt durch einen pneumatischen Bremskraftverstärker insbesondere auch zur Verdeutlichung der elektrischen Anbindung an die Fahrzeugelektronik.

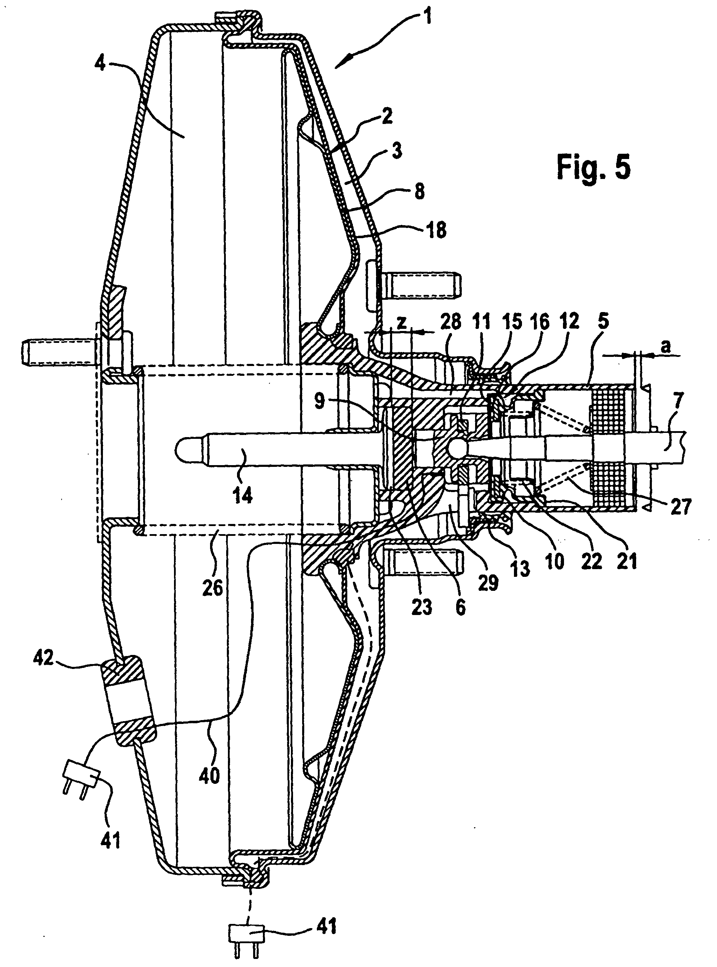

Ein Verstärkergehäuse 1 eines in Fig. 5 gezeigten pneumatischen Bremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden Ventilkörper 10, der mittels einer sich an einem Haltering 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der am unterdruckseitigen Ende des Unterdruckbremskraftverstärkers angebracht ist. Die an der Betätigungsstange 7 eingeleitete Eingangskraft wird auf die Reaktionsscheibe 6 mittels des Ventilkolbens 9 übertragen.

Eine in der Zeichnung schematisch dargestellte Rückstellfeder 26, die sich an der unterdruckseitigen Stirnwand des Verstärkergehäuses 1 an einem Flansch abstützt, hält die bewegliche Wand 2 in der gezeigten Ausgangsstellung. Außerdem ist eine zweite Druckfeder 27 vorgesehen, die zwischen der Betätigungsstange 7 und einem am Haltering 21 anliegenden, den Ventilkörper 10 am Haltering 21 sichernden Abstützring angeordnet ist und deren Kraft für eine Vorspannung des Ventilkolbens 9 bzw. seines Ventilsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem das Steuergehäuse 5 im Verstärkergehäuse 1 abgedichtet führenden Gleitdichtring 13 anliegt.

Wie die Figur 5 weiterhin zeigt, weist der Ventilkörper 10 eine mit den beiden Dichtsitzen 15,16 zusammenwirkende ringförmige Dichtfläche auf, die mittels einer metallischen Versteifungsscheibe versteift ist.

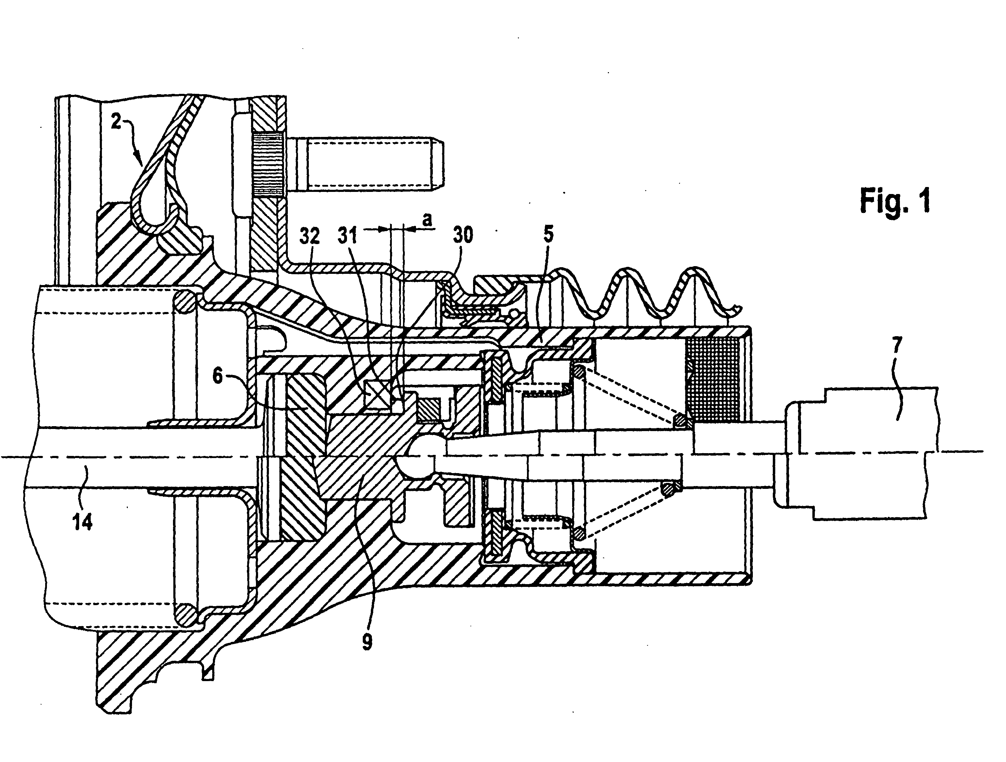

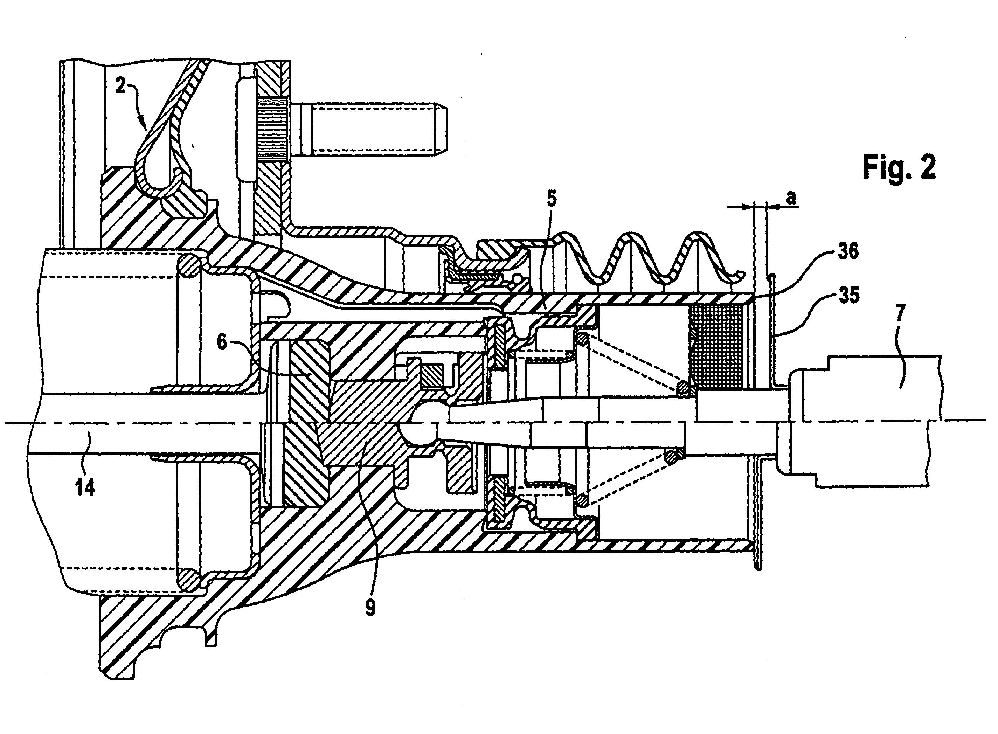

Im Rahmen der Bremsbetätigung und der sich aufbauenden Verstärkungskraft verschiebt sich die von dem Steuergehäuse 5 getragene bewegliche Wand 2 in Richtung auf den hauptzylinderseitigen Gehäuseteil. Die Position der beweglichen Wand 2 ist somit repräsentativ für den von dem Verstärker erzeugten Verstärkungskraftanteil. Andererseits repräsentiert die Position des Eingangsglieds (Betätigungsstange 7) unmittelbar den Fahrerwunsch. Bei den Lösungen nach den Figuren 1 und 2 wird dieser Zusammenhang ausgenutzt, um mit einfachen Mitteln den Aussteuerungspunkt zu sensieren. Mit anderen Worten: Es wird als Indikator für den Aussteuerungspunkt eine maximale Annäherung des Eingangsglieds (Betätigungsstange 7) an die bewegliche Wand 2 herangezogen. In gleicher Weise kann als Indikator die maximale Eintauchlänge des Eingangsglieds in das Steuergehäuse 5 herangezogen werden, was hinsichtlich der Anordnung des erforderlichen Schalters oder Sensors im Steuergehäuse 5 Raumvorteile verspricht.

Auch bei der Lösung nach Figur 1 besitzt der Ventilkolben 9 am Ende der Betätigungsstange 7 in seinem vorderen Bereich eine radiale, flanschartige Erweiterung mit einer Anlagefläche 30 (1. Referenzfläche), welche sich in einer Grundstellung in einem Abstand a zu einer steuergehäuseseitigen Anlagefläche 31 (2. Referenzfläche) befindet. Der Abstand a ist in diesem Zusammenhang so groß gewählt, daß der Spalt im Aussteuerungspunkt aufgebraucht oder zumindest wesentlich verringert ist, so daß eine Annäherung der Ventilkolbenanlagefläche 30 an der Steuergehäuseanlagefläche 31 vorliegt. Es ist in weiterer Ausgestaltung der Erfindung denkbar, einen elektrischen Taster oder Schalter 32 mit einem Betätigungselement vorzusehen, welcher in das Steuergehäuse 5 integriert ist, und dessen Betätigungselement auf die Annäherung des Ventilkolbens 9 anspricht, so daß nach erfolgter Annäherung ein, den Aussteuerungspunkt meldendes Signal erzeugbar ist. In diesem Zusammenhang wird ganz bewußt auf die Beschreibung oder konkrete Zeichnung der Anordungsmöglichkeit des Schalters oder Sensors verzichtet, weil dem Fachmann hinsichtlich dessen Anordnung vielfältige Abänderungen bekannt sind, ohne die Erfindung zu verlassen. Es ist nur beispielsweise und gewissermaßen in kinematischer Umkehr grundsätzlich auch denkbar, den Schalter oder Sensor mit seinem Betätigungselement in den Ventilkolben 9 zu integrieren, und zusammen mit diesem zu bewegen, wobei ein Signal erzeugt wird, wenn der Ventilkolben 9 mit seiner Erweiterung und zusammen mit dem Schalter, zur Anlage an der steuergehäuseseitigen Anlagefläche 31 gebracht wird.

Für alle Lösungen gilt, daß grundsätzlich Sensoren, insbesondere Hall-Sensoren gegenüber elektrischen Schaltern zu bevorzugen sind. Dies liegt darin begründet, daß bei Sensoren eine automatische Kalibrierung durchgeführt werden kann, damit ein fester Gerätereferenzpunkt beispielsweise in dem unbetätigten Zustand festgelegt werden kann. Dies erfolgt beispielsweise beim Einschalten der Zündung, oder bei jeder Bremsbetätigung und ermöglicht eine toleranzunabhängige, klare Zuordnung eines Schaltzustandes zu einem bestimmten Verstärkerbetätigungszustand (Relativlage bestimmter Bauteile zueinander) und zwar auch nach vielen Betriebsjahren und entsprechendem Verschleiß. Schalter sind dagegen toleranzempfindlicher, weil eine exakt auf die Toleranzlage abgestimmte Einbaulage garantiert werden muß, damit einem bestimmten Betätigungszustand des Bremskraftverstärkers ein bestimmter Schaltzustand des Schalters zugeordnet ist.

Bei allen Lösungen können schließlich Mittel zum Erkennen der Haltezeit der maximalen Annäherung vorgesehen sein, so daß erst nach Ablauf einer vorbestimmten Zeitspanne, innerhalb derer die maximale Annäherung vorliegt, ein den Aussteuerungspunkt meldendes Signal erzeugt wird.

Das Mittel kann als Zeitglied, beispielsweise auch in Form eines Algorithmus in eine elektrische Steuereinheit implementiert sein, so daß insoweit nicht zwangsläufig zusätzliche Hardware notwendig ist. Es bietet sich an, als Haltezeit beispielsweise 300 Millisekunden vorzusehen, so daß ein Aussteuerungssignal erst emittiert wird, wenn ein Signal über die besagte Zeit an dem Schalter / Sensor anliegt.

Ergänzend kann zu der Verwendung des Haltegliedes folgendes gesagt werden. Bei den Lösungen gemäß den Figuren 1,2, und 4 ist im Grunde genommen die relative Lage zwischen dem Eingangsglied 7 und dem Steuergehäuse 5 entscheidend für die Bewertung, ob sich der Verstärker im Aussteuerbereich bzw. der Sättigung befindet oder nicht. Angestrebt wird, daß die zusätzliche Verstärkung beispielsweise durch eine ABS-Pumpe dann eingeschaltet wird, wenn der Bremskraftverstärker ausgesteuert ist. Das heißt, daß eine Vergrößerung der auf den nachgeschalteten Hauptzylinder wirkenden Kraft nicht mehr von dem Bremskraftverstärker unterstützt wird sondern von dem Fahrer selbst über das Pedal zusätzlich aufgebracht werden muß. In diesem Falle wird nämlich von dem Fahrer zusätzliche Bremskraft angefordert, die der Verstärker nicht zur Verfügung stellen kann, weil er entweder ausgesteuert ist oder defekt ist. Weiter oben wurde erläutert, daß man diesen Zustand dadurch erkennen kann, dass ein Spalt zwischen Steuergehäuse fünf und Eingangsglied 7 einen definierten Wert unterschreitet oder das das Eingangsglied gegenüber dem Steuergehäuse auf Anschlag geht. Ist nun allerdings der in einem Bremskraftverstärker für seinen normalen Betrieb vorgesehene Spalt hinreichend klein, so hat man zwar einen entsprechend kleinen Leerweg für das Pedal, um von dem Normalbetrieb in den Zustand übergehen zu können, bei dem das Eingangsglied gegenüber dem Steuergehäuse auf Anschlag liegt, so daß man mit dem Pedal über das Steuergehäuse direkt auf die Druckstange des Hauptzylinders einwirken kann. In diesen Zustand ist es erwünscht die zusätzliche Bremskraft einzuschalten, um den Fahrer die Unterstützung zu geben, die er von dem Bremskraftverstärker nicht mehr bekommt.

Allerdings kann es bei einem für den Normalbetrieb vorgesehenen kleinen Spalt dazu kommen, daß dieser kleine Spalt durch eine hinreichend kräftige Betätigung des Pedals durch den Fahrer schon während der Normal-Funktion des Bremskraftverstärkers überwunden wird. Dies kommt daher, daß der Fahrer durch eine kräftige Bewegung das Eingangsglied gegenüber dem Steuergehäuse hinreichend weit verschiebt und dabei anschlägt. Da bei dieser Bewegung aber ein Ventil geöffnet wird, durch welches der Druck der Atmosphäre Zugriff auf die Arbeitskammer des Verstärkers hat, wird hierdurch die bewegliche Wand 2 und damit das Steuergehäuse 5 dem Eingangsglied 5 nachgeführt, wodurch sich der Spalt wieder vergrößert. Demgegenüber bleibt im Aussteuerbereich des Verstärkers das Eingangsglied so lange gegenüber dem Steuergehäuse auf Anschlag wie der Fahrer den Wunsch nach zusätzlicher Bremskraft hat und dementsprechend auf das Eingangsglied einwirkt. Durch das Zeitglied ist es daher möglich, bei einem kleinen zur Verfügung stehenden Spalt zu unterscheiden, ob der Fahrer in dem normalen Funktionsbereich des Bremskraftverstärkers kurzzeitig recht stark auf das Eingangsglied eingewirkt hat oder ob sich der Bremskraftverstärker bereits in seinem Aussteuerbereich befindet.

Macht man aber den Spalt hinreichend groß, so kann man unter Umständen auf eine Zeitmessung verzichten. Es wird dann nicht vorkommen, daß der Fahrer im außerhalb des Aussteuerbereiches liegenden Arbeitsbereich des Bremskraftverstärkers mit dem Eingangsglied an den Anschlag gerät, da bei einem einen normalen Bremsvorgang die Kraft des Fahrers hierzu nicht ausreicht und das Steuergehäuse umgehend dem Eingangsglied nachgeführt wird, so daß der Anschlag während des Normalbetriebes nicht erreicht wird. Erst dann, wenn der Bremskraftverstärker im Aussteuerbereich ist kann der Fahrer durch den dann notwendigen erheblichen Kraftaufwand mit dem Eingangsglied in die Reaktionsschreibe hinreichend weit eintauchen, bis das Eingangsglied auf Anschlag mit dem Steuergehäuse gerät. Mit anderen Worten, es hängt stark von der Größe des Spaltes im Normalbetrieb ab, ob die Verwendung einer Zeitsmeßeinrichtung notwendig ist, um zwischen Normalbereich und Aussteuer Bereich des Bremskraftverstärkers unterscheiden zu können.

Des oben gesagte gilt sinngemäß auch dann, wenn für das Auslösen der Hilfskraft nicht das Erreichen des Anschlages sondern die Betätigung des Schalters schon vor dem Anschlag maßgeblich ist.

Der Figur 2 ist ein abgewandeltes Ausführungsbeispiel entnehmbar, wobei übereinstimmende Bauteile und Merkmale mit gleichen Bezugsziffern gekennzeichnet sind. Figur 2 unterscheidet sich dadurch von der Lösung nach Figur 1, daß die Überwachung der Annäherung nicht im inneren des Steuergehäuse 5 erfolgt, sondern quasi außerhalb zwischen einem Anlagestück 35 und einer Endfläche 36 eines rohrförmigen Kragen des Steuergehäuse 5. Es versteht sich, daß anstatt des separaten Anschlagstück 35 selbstverständlich auch ein einstükkiger Absatz an der Betätigungsstange 7 angeordnet sein kann. Wie bei der Lösung nach Figur 1 beschrieben, kann je nach kinematischem Vorzug auch diesbezüglich eine Anordnung des Schalters Sensors an dem Steuergehäuse 5 oder an dem Ventilkolben 9 vorgenommen werden.

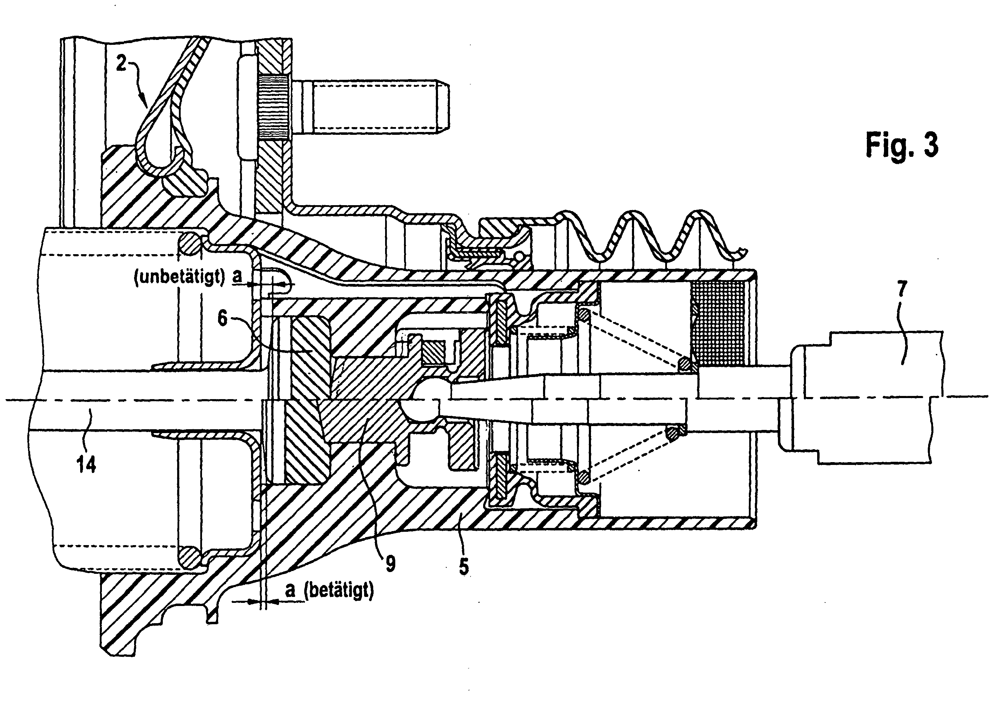

Figur 3 betrifft eine von den Figuren 1 und 2 unabhängige, andere Lösung welche ebenfalls auf dem Prinzip der direkten Sensierung einer relativen Verschiebung auf der dem Ventilkolben 9 abgewandten Seite der Reaktionsscheibe 6 beruht. Dabei werden wie bereits zuvor für die Bezeichnung gleicher Merkmale gleiche Bezugsziffern herangezogen.

Die Sensierung der Relativverschiebung erfolgt hierbei zwischen dem Ausgangsglied (Druckstange14 ) und gewissermaßen mittelbar der beweglichen Wand 2, genauer gesagt zwischen der Druckstange 14 und dem die bewegliche Wand 2 tragenden und die Reaktionsscheibe 6 teilweise aufnehmenden Steuergehäuse 5. In grundsätzlich zu der Lösung nach den Figuren 1 und 2 ähnlicher Weise wird eine Spaltverkürzung zwischen Druckstange 14 und Steuergehäuse 5 für die Sensierung des Aussteuerpunktes genutzt. Diese Lösung hat den Vorteil, daß der Einbauraum für den elektrischen Schalter in einen Bereich des Bremskraftverstärkers verlagert ist, in dem aufgrund des Unterdruckraumes 4 ausreichend Einbauraum zur Verfügung steht. Es herrscht dort insbesondere nicht die aufgrund der Kanalführung in einem Steuergehäuse 5 vorliegende Platznot.

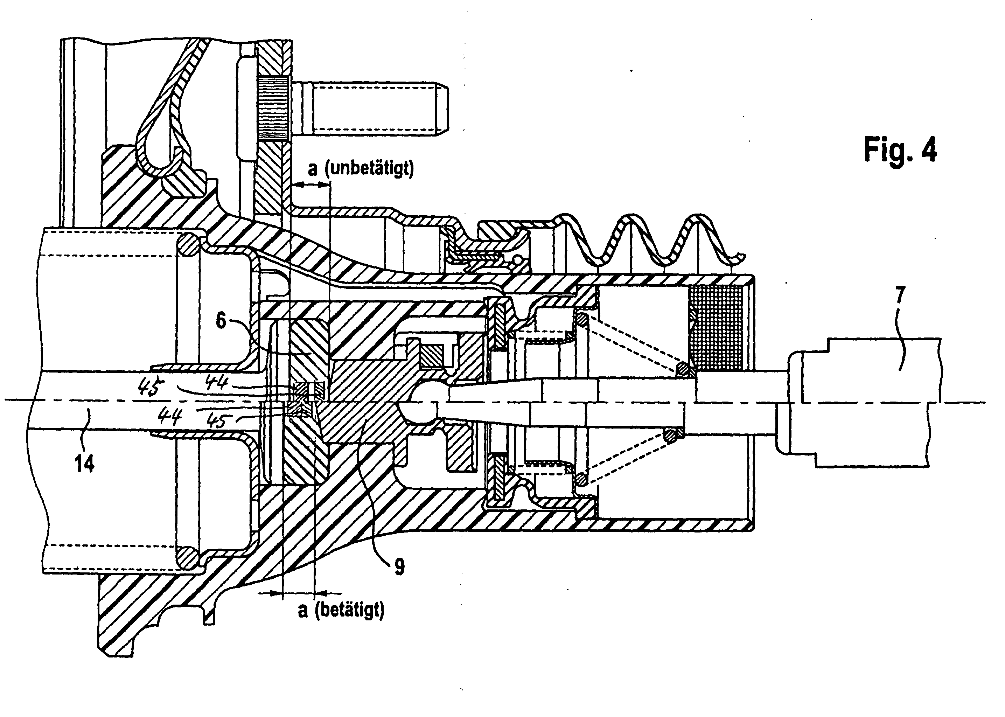

Bei der Lösung nach der Figur 4 erfolgt eine Sensierung eines Relativweges zwischen dem Eingangsglied (Ventilkolben 9) und dem Ausgangsglied (Druckstange 14). Diese Verschiebung beruht auf einer Deformation der Reaktionsscheibe 6 infolge herrschender Reaktionskräfte. Weil große Bremskräfte und infolgedessen große Reaktionskräfte zu einer Verringerung der Dicke der Reaktionsscheibe 6 führen, wird auch hierbei eine Verkürzung eines Abstandes zwischen zwei Referenzpunkten oder Referenzebenen von zwei unterschiedlichen, in dem Kraftfluß liegenden, Bauteilen ausgenutzt um den Aussteuerungspunkt zu erkennen. Wie bei der Lösung nach den Figuren 1 und 2 ist hierbei eine Überwachung des Zeitraumes der maximaler Annäherung zwischen den beiden relativ zueinander bewegten Ein- und Ausgangsgliedern erforderlich (Haltezeit). Dadurch wird sichergestellt, daß ein Aussteuerungspunktdetektionssignal nur dann emittiert wird, wenn die maximale Relativverschiebung (Annäherung) beispielsweise mehr als 300 Millisekunden andauert. Ein sogenanntes Durchtreten des Pedals beispielsweise im Rahmen einer Panikbremsung, was für einen kurzen Zeitraum zu einer großen Relativverschiebung führen kann, wird somit eindeutig von einem Aussteuerpunkt oder von einem Defekt des Boosters unterschieden. Mit anderen Worten wird die Gefahr von Fehlauslösungen reduziert, obwohl nur ein einziger Schalter oder Sensor eingesetzt wird.

Es versteht sich, daß notwendige Rechenoperationen anhand von Algorithmen in einer Steuerelektronik implementiert sind und ausgeführt werden, was selbstverständlich in entsprechend vorgesehenen Datenverarbeitungseinheiten erfolgt.

In Fig. 4 ist angedeutet, daß der Schaltkontakt auch in das Reaktionselement 6 eingefügt werden kann. Um dies zu verdeutlichen sind in Fig. 4 Kontakte 45,44 angedeutet, die aus einem leitfähigen Material bestehen. Kommen die Kontakte miteinander in Berührung, so wird ein nicht dargestellter Stromkreis geschlossen, was einem entsprechenden Auslösesignal für die zur Verfügung zu stellende Hilfskraft entspricht. Die Kontakte können auch in anderer Form ausgeführt sein. So kann beispielsweise der Kontakte 45 mit dem VentilKolben 9 einstückig verbunden sein. Entsprechendes gilt hinsichtlich des Kontaktes 44 für das Ausgangsglied 14. Es muß allerdings dafür gesorgt werden, dass bei geöffneten Schalter 44,45 die Kontakte nicht miteinander durch Masse oder Erde verbunden sind. Auch muß ein freier Raum zwischen den Kontakten bestehen, damit diese miteinander in Berührung treten können.

In Hinblick auf alle Lösungen versteht es sich weiterhin, daß die elektrischen Signale des Schalters/Sensors über eine flüssigkeitsdichte Kabelverbindung 40 der nicht gezeigten elektrischen Steuereinheit zugeführt werden. Diese kann räumlich grundsätzlich an einer beliebigen Stelle eines Fahrzeugs, beispielsweise innerhalb des Motorraumes oder innerhalb eines Fahrzeuginnenraumes angeordnet sein. Für die Verbindung mit einem fahrzeugseitig vorgesehenen, sogenannten fly-lead oder für einen unmittelbaren Anschluß an die elektrische Steuereinheit kann eine verstärkerseitige Kabelverbindung 40 mit einem Stecker 41 vorgesehen sein. Die Anordung der Kabelverbindung 40 wird in Figur 5 schematisch verdeutlicht. Gemäß einer Variante ist es denkbar, das Kabel rationell im Bereich einer ohnehin vorgesehenen Gehäusedurchführung 42 (für einen Kabel-/Vakuumanschluß) vorzusehen, und das Kabel selbst durch den Raum 4 zu führen. Gemäß einer anderen Variante wird das Kabel im Bereich einer Gehäuselancierung herausgeführt und im Gehäuseinneren an die Membran angelegt. Für beide Fälle bietet es sich an, zumindest einen Teil des Kabelbaumes 40 in einen Teil des Steuergehäuse 5 (aus Kunststoff) einzuspritzen. Schließlich kann es insbesondere auch bei einer Lösung (in Anlehnung an Figur 2) mit außerhalb vorgesehenen Kontakten vorgesehen sein, zumindest Teile der Betätigungsstange 7 und / oder des Ventilkolben 9 zusätzlich auch als elektrischen Leiter für die Signalübertragung vorzusehen.

Statt die Kontakte über Leitungen 40 aus dem Gehäuse des Bremskraftverstärkers 1 herauszuführen kann das auch ohne Leitungen mit Hilfe einer nicht dargestellten Funk-Strecke ( Telemetrie) geschehen. Statt einen Abstand oder Weg zu messen kann es sich im Rahmen der Erfindung auch empfehlen zum Feststellen des Sättigungsbereiches des Bremskraftverstärkers das Differential des Weges zu messen. Kommt nämlich der Bremskraftverstärker in seinen Sättigungsbereich, so wird das Eingangsglied bzw. der Ventilkolben solange in das Reaktionselement eintauchen, bis der Ventilkolben an dem Steuergehäuse anschlägt. Ab diesem Zeitpunkt wirkt der Fußkraft des Fahrers die komplette Kraft des Hauptzylinders entgegen was zu einer Bewegungsänderung der Bewegung am Pedal und damit des Ventilkolbens führt. Das Differential des Pedalweges wird sich dem entsprechend ändern.

Bei der elektrischen Steuereinheit handelt es sich vorzugsweise um eine elektrische Steuereinheit eines ABS-Regelsystems insbesondere mit Fahrdynamikregelungsfunktionen oder um eine elektrische Steuereinheit eines fremdbetätigbaren, vorzugsweise elektromagnetisch betätigbaren Bremskraftverstärkers. Derartige Steuereinheiten sind ohnehin in nahezu allen modernen Fahrzeugen vorhanden, so daß der erforderliche Hardware-Aufwand für die Steuereinheit weiter verringert wird.

## Patentansprüche

1. Fahrzeugbremssystem mit einem pneumatischen Bremskraftverstärker (1), welcher ein Eingangsglied (7) zur Betätigung durch einen Fahrzeugführer und ein Ausgangsglied (14) sowie ein, eine bewegliche Wand (2) tragendes und eine Reaktionsscheibe (6) zumindest teilweise aufnehmendes Steuergehäuse (5) aufweist, wobei ferner Mittel (32) zum Erkennen des Aussteuerungspunktes des pneumatischen Bremskraftverstärkers (1) vorgesehen sind, welche für die Betätigung einer weiteren Bremskraftverstärkungsvorrichtung heranziehbar sind, **dadurch gekennzeichnet, daß** ein einziges Schalt- oder Sensormittel (32) vorgesehen ist, welches eine, oberhalb einer Schaltschwelle liegende, maximale Annäherung (a,z) zwischen einem die Eingangskraft (Fe) repräsentierenden Bauteil des Bremskraftverstärkers (1), insbesondere einem Eingangsglied (7), und einem die Verstärkungskraft (Fv) repräsentierenden Bauteil (14,5) des Bremskraftverstärkers (1), insbesondere einer beweglichen Wand (2) oder einem damit verbundenen Bauteil (5), sensiert und daß ferner Mittel zum Erkennen der Haltezeit der maximalen Annäherung (a,z) vorgesehen sind, so daß erst nach Ablauf einer vorbestimmten Zeitspanne, innerhalb derer die maximale Annäherung vorliegt, ein den Aussteuerungspunkt meldendes Signal erzeugt wird.

2. Bremssystem nach Anspruch 1, **dadurch gekennzeichnet, daß** die Sensierung der Annäherung (a,z) zwischen dem Eingangsglied (7) bzw. einem Ventilkolben (9) und dem, die bewegliche Wand (2) tragenden Steuergehäuse (5) erfolgt.

3. Bremssystem nach einem oder mehreren der vorhergehenden Ansprüche, **dadurch gekennzeichnet, daß** in dem Bereich zwischen dem Ventilkolben (9) und dem Steuergehäuse (5) ein Spalt (a) vorgesehen ist, welcher sich mit zunehmender Verstärkungskraft des Bremskraftverstärkers (1) verkleinert ist, und daß ein vollständig aufgebrauchter oder zumindest minimierter Spalt (a) für die Sensierung des Aussteuerungspunktes herangezogen wird.

4. Bremssystem nach einem oder mehreren der vorhergehenden Ansprüche, **dadurch gekennzeichnet, daß** der Schalter/Sensor (32) mit seinem Betätigungselement in das Steuergehäuse (5) oder in den Ventilkolben (9) oder in das Reaktionselement (6) integriert ist.

5. Bremssystem nach einem oder mehreren der vorhergehenden Ansprüche, **dadurch gekennzeichnet, daß** eine elektrische Steuereinheit vorgesehen ist, wobei elektrischen Signale des Schalters/Sensors (32) über eine flüssigkeitsdichte Kabelverbindung (40) der Steuereinheit zugeführt werden.

6. Bremssystem nach einem oder mehreren der vorhergehenden Ansprüche, **dadurch gekennzeichnet, daß** die Steuereinheit für die Ermittlung des Aussteuerpunktes in das Gehäuse einer anderen elektrischen Steuereinheit, insbesondere das eines ABS-Regelsystems oder das einer Steuereinheit eines elektromagnetisch betätigbaren Bremskraftverstärkers integriert ist.

7. Bremssystem nach einem oder mehreren der vorhergehenden Ansprüche, **dadurch gekennzeichnet, daß** ein Mikroschalter für die Sensierung des Aussteuerpunktes vorgesehen ist.

## Claims

1. Vehicle brake system with a pneumatic brake booster (1) which includes an input member (7) being actuated by a vehicle operator, and an output member (push rod) (14) as well as a control housing (5) that carries a movable wall (2) and accommodates a reaction plate (6) at least in part, wherein there is further provision of a means (32) for detecting the point of maximum boosting of the pneumatic brake booster (1) that can be used for the actuation of another brake force boosting device,
**characterized in that** one single switching or sensor means (32) is provided, which senses a maximum approach (a, z) above a switching threshold between a component of the brake booster (1) representative of the input force (Fe), especially an input member, and a component (14, 5) of the brake booster (1) representative of the boosting force (Fv), especially a movable wall (2) or a component (5) connected thereto, and **in that** there is further provision of a means for detecting the hold time of the maximum approach (a, z) so that a signal reporting the point of maximum boosting will only be generated after expiry of a predefined time interval during which the maximum approach occurs.

2. Brake system as claimed in claim 1,
**characterized in that** the approach (a, z) between the input member (7) or a valve piston (9), respectively, and a control housing (5) carrying the movable wall (2) is sensed.

3. Brake system as claimed in any one or more of the preceding claims,
**characterized in that** a slot (a) is provided in the area between the valve piston (9) and the control housing (5), said slot being decreased with increasing boosting force of the brake booster (1), and **in that** a completely used up or at least minimized slot (a) is taken into account for sensing the point of maximum boosting.

4. Brake system as claimed in any one or more of the preceding claims,
**characterized in that** the switch/sensor (32) with its actuating element is integrated into the control housing (5), or into the valve piston (9), or into the reaction element (6).

5. Brake system as claimed in any one or more of the preceding claims,
**characterized in that** an electric control unit is provided, and electric signals of the switch/sensor (32) are sent to the control unit by way of a fluid-tight cable connection (40).

6. Brake system as claimed in any one or more of the preceding claims,
c**haracterized** in that the control unit for determining the point of maximum boosting is integrated into the housing of another electric control unit, especially the housing of an ABS control system or of an electromagnetically operable brake booster.

7. Brake system as claimed in any one or more of the preceding claims,
**characterized in that** a micro switch for sensing the point of maximum boosting is provided.

## Revendications

1. Système de freinage de véhicule avec un servofrein pneumatique (1) qui comporte un élément d'entrée (7) pour l'actionnement par un conducteur du véhicule et un élément de sortie (14) ainsi qu'un boîtier de commande (5) portant une paroi mobile (2) et recevant au moins en partie un disque de réaction (6), des moyens (32) étant prévus en outre pour détecter le point de commande maximale du servofrein pneumatique (1), lesquels peuvent être utilisés pour l'actionnement d'un autre dispositif à servofrein, **caractérisé en ce qu'**il est prévu un seul moyen de commutation ou de détection (32) qui détecte une approche maximale (a, z), située au-dessus d'une valeur de seuil, entre un composant du servofrein (1) représentant la force d'entrée (Fe), en particulier un élément d'entrée (7), et un composant (14, 5) du servofrein (1) représentant la force d'amplification (Fv), en particulier une paroi mobile (2) ou un composant (5) relié à celle-ci, et **en ce que** sont prévus en outre des moyens pour détecter le temps de maintien de l'approche maximale (a, z), de sorte qu'après expiration seulement d'un intervalle de temps prédéterminé, à l'intérieur duquel se situe l'approche maximale, un signal annonçant le point de commande maximale est généré.

2. Système de freinage selon la revendication 1, **caractérisé en ce que** la détection de l'approche (a, z) s'effectue entre l'élément d'entrée (7) ou un piston de soupape (9) et le boîtier de commande (5) portant la paroi mobile (2).

3. Système de freinage selon une ou plusieurs des revendications précédentes, **caractérisé en ce qu'**il est prévu, dans la zone entre le piston de soupape (9) et le boîtier de commande (5), une fente (a) qui diminue lorsque augmente la force d'amplification du servofrein (1), et **en ce qu'**on utilise une fente (a) entièrement épuisée ou au moins minimisée pour la détection du point de commande maximale.

4. Système de freinage selon une ou plusieurs des revendications précédentes, **caractérisé en ce que** l'interrupteur/capteur (32) est intégré avec son élément d'actionnement dans le boîtier de commande (5) ou dans le piston de soupape (9) ou dans l'élément de réaction (6).

5. Système de freinage selon une ou plusieurs des revendications précédentes, **caractérisé en ce qu'**il est prévu une unité de commande électrique, des signaux électriques de l'interrupteur/capteur (32) étant amenés à l'unité de commande par une liaison par câble (40) étanche aux fluides.

6. Système de freinage selon une ou plusieurs des revendications précédentes, **caractérisé en ce que**, pour déterminer le point de commande maximale, l'unité de commande est intégrée dans le boîtier d'une autre unité de commande électrique, en particulier celui d'un système de régulation ABS ou celui d'une unité de commande d'un servofrein à actionnement électromagnétique.

7. Système de freinage selon une ou plusieurs des revendications précédentes, **caractérisé en ce qu'**il est prévu un micro-interrupteur pour la détection du point de commande maximale.
